# EUROPÄISCHE PATENTSCHRIFT

(11) **EP 0 857 125 B1**
(45) Veröffentlichungstag und Bekanntmachung des Hinweises auf die Patenterteilung: **07.11.2001**
(21) Anmeldenummer: 97931712.0
(22) Anmeldetag: 08.07.1997
(51) Int. Cl.: B60S 1/08, H02H 7/085

(54) **SCHALTANORDNUNG ZUR ANSTEUERUNG EINES WISCHERMOTORS**
CIRCUIT ARRANGEMENT FOR CONTROLLING A WIPER MOTOR
CIRCUIT POUR COMMANDER UN MOTEUR D'ESSUIE-GLACE

(30) Priorität: 23.07.1996 DE 19629597
(43) Veröffentlichungstag der Anmeldung: 12.08.1998
(73) Patentinhaber: ROBERT BOSCH GMBH, 70442 Stuttgart (DE)
(72) Erfinder: GRASS, Ansgar, D-77652 Offenburg (DE)
(86) Internationale Anmeldenummer: DE9701435
(87) Internationale Veröffentlichungsnummer: WO9803376

(56) Entgegenhaltungen:
- EP-A- 0 604 289
- US-A- 5 030 899
- US-A- 5 525 878
- PATENT ABSTRACTS OF JAPAN vol. 013, no. 500 (M-891), 10.November 1989 & JP 01 202555 A (JIDOSHA DENKI KOGYO CO LTD), 15.August 1989,

## Beschreibung

### Stand der Technik

Die Erfindung geht aus von einer Schaltanordung eines Wischermotors nach dem Oberbegriff des Hauptanspruchs. Eine derartige bekannte Schaltanordnung für einen Wischermotor (DE 28 52 676 C2) enthält die Kombination einer drehzahlabhängigen und einer temperaturabhängigen Schaltstufe. Die drehzahlabhängige Schaltstufe vergleicht den zeitlichen Abstand der drehzahlabhängigen Impulse mit einer Bezugsgröße und wird dabei so ausgelegt, daß ein Schaltsignal zum Abschalten des Motors durch ein Schaltelement nur ausgelöst wird, wenn der Motor sich nur noch sehr langsam dreht oder blockiert. Durch periodisches Ein- und Ausschalten des Schaltelements wird bei Behebung der Störung die Funktion des Wischermotors selbsttätig wieder aufgenommen. Um die Abschaltzeit zum Schutz des Motors nicht zu groß wählen zu müssen, wird zusätzlich dessen Temperatur überwacht, indem der Spannungsabfall an der Ankerwicklung des Motors abgetastet wird, und damit das Schaltelement über eine weitere Schaltstufe abschaltbar ist. Dies geschieht derart, daß regelmäßig ein Relais umgeschaltet wird, um zwischen einer Spannungsquelle und einer Konstantstromquelle hin und her zu schalten. Wenn die Konstantstromquelle durch das Relais über den Motor auf Masse geschaltet ist, dann wird über den Widerstand der Ankerwicklung die Temperatur des Motors ermittelt. Wird die Spannungsquelle durch das Relais über den Motor auf Masse geschaltet, dann kann keine Motortemperatur ermittelt werden.

Ein Nachteil der drehzahlabhängigen Impulserfasssung - wenn bei jedem Wischzyklus mehrere Impulse ausgelöst werden - ist der, daß eine Bezugsgröße benötigt wird, die je nach Winkelstellung der Wischhebel unterschiedliche Werte annimmt, was eine aufwendige Schaltung erfordert. Ein weiterer Nachteil liegt darin, daß die Schaltanordnung selbst nicht temperaturüberwacht wird, so daß bei Verwendung eines Halbleiterschalters als Leistungsschaltelement das Leistungsschaltelement nicht gegen thermische Überlastung und damit vor Zerstörung geschützt wird.

Ein weiterer Nachteil liegt darin begründet, daß Temperaturüberwachung und Spannungsversorgung des Motors nicht gleichzeitig möglich sind. Zur Temperaturüberwachung muß also jedesmal der Motor ausgeschaltet werden. Dies erhöht den Verschleiß des Motors und geht zu Lasten seiner Lebensdauer.

### Vorteile der Erfindung

Die erfindungsgemäße Anordnung mit den kennzeichnenden Merkmalen des Hauptanspruchs hat den Vorteil, daß sowohl Motor als auch Leistungsschaltelement durch eine Chiptemperaturüberwachung gegen thermische Überlastung geschützt sind. Demzufolge kann auf eine Kühlung der Halbleiterendstufe verzichtet und deswegen die Endstufe in kostengünstiger SMD-Technik bestückt werden. Die Schaltungsanordnung ist außerdem weniger aufwendig.

Es ist zwar aus der Zeitschrift Elektor 4/93, S. 41 eine Temperaturüberwachung bei Halbleiterleistungsschaltern bekannt, bei der auf einem Chip zusätzlich ein Temperatursensor und ein Thyristor integriert werden. Bei starker Erwärmung des Leistungsschaltelements zündet der Temperatursensor den Thyristor und sperrt dadurch das Leistungsschaltelement. Ein Überlastschutz für die am Leistungsschaltelement angeschlossene Last ist damit nicht gegeben. Somit ist es möglich, daß bei Verwendung eines leistungsschwachen Motors im Lastkreis bei blockiertem Motor der Blockierstrom zu einer ungenügenden Erwärmung der Halbleiterendstufe führt und die Chiptemperaturüberwachung nicht anspricht. Der Motor würde dauerhaft blockiert sein und beschädigt werden.

Durch die erfindungsgemäße Kombination von Parklagenüberwachung und Chiptemperaturüberwachung sind die Halbleiterendstufe und der Motor gleichermaßen geschützt, wobei die Halbleiterendstufe für Motoren unterschiedlicher Leistung geeignet ist.

Es sollte noch erwähnt werden, daß die temperaturabhängige und zeitabhängige Überwachung gleichzeitig zum Wischerbetrieb erfolgt, also kein Ein- und Ausschalten des Motors notwendig ist.

Durch die in den Unteransprüchen aufgeführten Maßnahmen ergeben sich vorteilhafte Weiterbildungen und Verbesserungen der im Hauptanspruch angegebenen Merkmale. Besonders vorteilhaft ist die Möglichkeit, einen selbstsperrenden Fet als Leistungsschaltelement gemäß Anspruch 2 verwenden zu können, dessen Gate mit einer vom Mittel zur Erfassung der Parklage abhängigen Steuerung verbunden und zu dessen Gate-Source-Strecke ein Thyristor parallel geschaltet ist.

Ein weiterer Vorteil ergibt sich aus der Möglichkeit einen kostengünstigeren Fet mit höherem Einschaltwiderstand R_{DSon} verwenden zu können, da im Blockierfall nicht die Gefahr einer thermischen Überlastung der Endstufe gegeben ist.

### Zeichnung

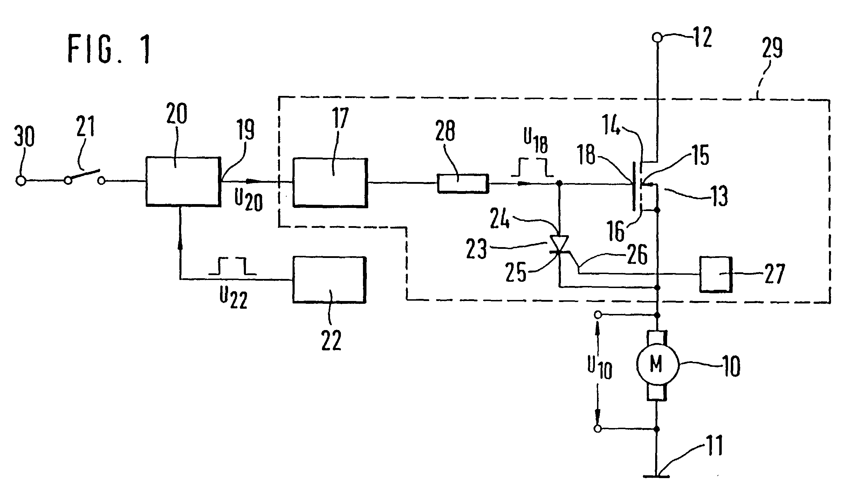

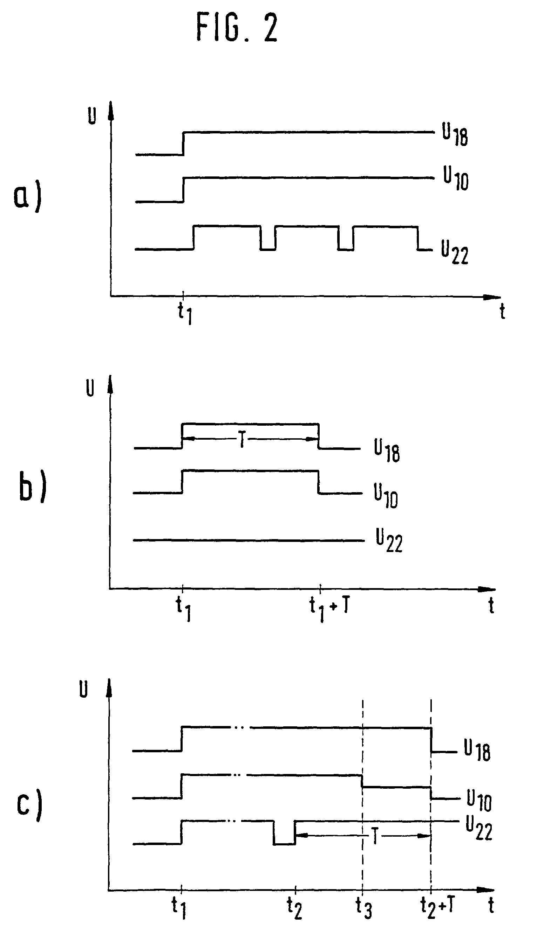

Ein Ausführungsbeispiel der Erfindung ist in der Zeichnung dargestellt und in der nachfolgenden Beschreibung näher erläutert. Figur 1 zeigt ein Blockschaltbild zur Ansteuerung eines Heckwischermotors und Figur 2 zeigt Spannungsdiagramme der Schaltung bei verschiedenen Betriebsfällen.

### Beschreibung des Ausführungsbeispiels

Die erfindungsgemäße Schaltanordnung enthält einen Heckwischermotor 10 als Last, der einseitig an Masse 11 geschaltet ist. Der Pluspol 12 einer Batteriespannung wird über einen n-Kanal Fet 13 über den Heckwischermotor 10 geschaltet. Dabei ist Drain 14 an dem Pluspol 12 und Source 15 an dem Heckwischermotor 10 angeschlossen. Source 15 und Substrat 16 des Fet 13 sind kurzgeschlossen. Der Fet 13 wird mit einer positiven Spannung gesteuert, die durch eine ansich bekannte Ladungspumpe 17 an Gate 18 gelegt wird. Die Ladungspumpe 17 und damit auch der Fet 13 werden durch ein Steuersignal U₂₀ am Steuerungsausgang 19 einer Steuerung 20 getaktet. Alternativ kann die Ladungspumpe 17 auch intern einen Taktgeber besitzen, so daß der Fet 13 nur über ein statisches Signal eingeschaltet wird. Die Steuerung 20 enthält in diesem Ausführungsbeispiel einen Microcontroller. Zum Ein- und Ausschalten der Steuerung 20 liegt ein Betriebsschalter 21 an der Steuerung 20 an, der durch einen Zündschloßschalter 30 (Klemme 15) versorgt wird.
Die Steuerung 20 erhält Parklagensignale U₂₂ von einem Mittel zur Erfassung der Parklage, das in diesem Ausführungsbeispiel aus einem Parklagensensor 22 gebildet wird (z.B. Hallsensor).
Parallel zur Gate-Source-Strecke des Fet 13 wird ein Thyristor 23 so geschaltet, daß seine Anode 24 an Gate 18 und seine Kathode 25 an Source 15 liegt. Der Thyristor 23 wird an seiner Steuerelektrode 26 durch einen Temperatursensor 27 gesteuert, der in an sich bekannter Weise wärmeleitend mit dem Fet 13 verbunden ist. Zwischen Ladungspumpe 17 und Gate 18 bzw. Thyristor 23 wird ein Strombegrenzerwiderstand 28 angebracht. Bei einem entsprechend hohen Innenwiderstand der Ladungspumpe 17 könnte der Strombegrenzerwiderstand 28 entfallen. Fet 13, Thyristor 23, Temperatursensor 27, Ladungspumpe 17 und Strombegrenzerwiderstand 28 bilden die Halbleiterendstufe 29 der Schaltanordnung.

Die Schaltanordnung zur Ansteuerung eines Wischermotors nach Figur 1 arbeitet, wie aus den Spannungsverläufen in Figur 2 erkennbar, folgendermaßen:

Der Heckwischermotor 10 wird geschaltet durch einen Leistungsschalter, in diesem Ausführungsbeispiel durch einen selbstsperrenden n-Kanal Fet 13. In Abhängigkeit von der am Gate 18 anliegenden Spannung U₁₈ wird der Heckwischermotor 10 im Zeitpunkt t₁ mit der Spannung U₁₀ angesteuert. Liegt keine Spannung U₁₈ am Gate 18 an, sperrt der Fet 13 und der Lastkreis ist ausgeschaltet. Überschreitet die Spannung U₁₈ am Gate 18 die Schwellspannung des Fet 13, so wird der Fet 13 leitend und die Batteriespannung, die zwischen dem Pluspol 12 und Masse 11 anliegt, fällt hauptsächlich an dem Heckwischermotor 10 ab. Das bedeutet, daß die Spannung U₁₈ wieder absinken und negativ würde und der Fet wieder sperren würde. Um dies zu verhindern, wird die Ladungspumpe 17 an das Gate 18 gelegt. Die Ladungspumpe 17 bringt die benötigte zusätzliche positive Spannung U₁₈ auf, vorzugsweise doppelte Batteriespannung, die den Fet 13 im leitenden Zustand beläßt.

Durch die, von der Steuerung 20 getaktete oder intern getaktete, Ladungspumpe 17 wird der Fet 13 gesteuert. Im ungestörten Betrieb gemäß Figur 2a führt der Wischhebel die durch die Steuerung 20 vorgegebene Wischtätigkeit aus.

Um Störungen der normalen Wischtätigkeit erfassen zu können, liefert ein Mittel zur Erfassung der Parklage, im vorliegenden Ausführungsbeispiel ein Parklagensensor 22, Parklagensignale U₂₂ an die Steuerung 20. Zwei unterschiedliche digitale Signale treten dabei auf, je nachdem ob sich der Wischhebel in der Parklage befindet oder nicht. Im vorliegenden Ausführungsbeispiel können die Signale zwischen 0 Volt und 5 Volt oder zwischen 0 Volt und Batteriespannung wechseln. Das Signal 0 Volt tritt für die Parklagenstellung ein. Für die Regelung der Steuerung sind die Signalwechsel relevant.

Im Beispielfall gemäß Figur 2b tritt zum Zeitpunkt t₁ durch den in der Parklage auf der Heckscheibe angefrorenen Wischhebel eine Störung auf. Folglich unterbleiben die Signalwechsel und nach einer, von der Steuerung 20 vorgegebenen, maximalen Bestromungszeit T wird der Fet 13 gesperrt und der Heckwischermotor 10 ausgeschaltet. Die maximale Bestromungszeit T richtet sich nach der eingestellten maximal möglichen Wischzyklusdauer. Als beispielhafter Wert sei für die maximale mögliche Wischzyklusdauer bei einer Außentemperatur von -40°C 7 Sekunden angegeben.

Ein weiteres Beispiel einer durch den Parklagensensor 22 detektierbaren Störung ist die Blockierung des Wischhebels während des Wischens durch Schneeverwehungen auf der Scheibe oder andere Hindernisse.

Störungen, wie zum Beispiel das Dauerwischen auf trockener Scheibe, also Überlastung des Heckwischermotors 10, werden gemäß Figur 2c durch die Temperaturüberwachung erkannt. Hierzu wird der Gate-Source-Strecke 18-15 des Fet 13 der Thyristor 23 parallelgeschaltet, der durch den Temperatursensor 27 gesteuert wird. Im störungsfreien Betrieb ist der Thyristor 23 gesperrt. Bei Überlastung des Heckwischermotors 10 erwärmt sich der Fet 13. Bei Erreichen der maximal zulässigen Substrattemperatur des Fet 13 zum Zeitpunkt t₃ zündet der Temperatursensor 27 den Thyristor 23, der die Gate-Source-Strecke 18-15 kurzschließt. Durch die Serienschaltung des Strombegrenzerwiderstands 28 mit dem gezündeten Thyristor 23 entsteht am Thyristor 23 ein so kleiner Spannungsabfall, daß die Schwellenspannung des Fet 13 unterschritten und der Lastkreis abgeschaltet wird. Die Ladungspumpe 17 fungiert nun als Spannungsquelle gegen Masse 11. In diesem Stromkreis sind Strombegrenzerwiderstand 28, leitender Thyristor 23 und Heckwischermotor 10 in Serie geschaltet.

Der Thyristor 23 bleibt leitend, solange der Anodenstrom des Thyristors 23 größer ist als sein Haltestrom. In diesem Fall wird der Heckwischermotor 10 weiterhin bestromt. Durch den Spannungsabfall am Strombegrenzerwiderstand 28 fällt jedoch nur eine vernachlässigbar kleine Spannung U₁₀ am Heckwischermotor 10 ab, die zum Stillsetzen des Heckwischermotors 10 führt (Zeitpunkt t₃). Der Strombegrenzerwiderstand 28 übernimmt die Funktion eines Spannungsteilers.

Ist der Heckwischermotor 10 stillgesetzt, unterbleibt der Signalwechsel (Zeitpunkt t > t₃) des Parklagensensors 22 an die Steuerung 20 und nach der, durch die Steuerung 20 vorgegebenen, maximalen Bestromungsdauer T wird der Spannungsabfall am Thyristor 23 so klein - weil die Ladungspumpe 17 ausgeschaltet wird, indem Masse 11 an den Widerstand 28 gelegt wird - daß der Anodenstrom unter den Haltestrom fällt und der Thyristor 23 sperrt (Zeitpunkt t₂+T). Daraus ergibt sich eine als Rückkopplung konzipierte zusätzliche Wirkung der Temperaturüberwachungsstufe, indem bei Ansprechen der Chiptemperaturüberwachung durch Stillsetzen des Motors 10 eine Blockierung simuliert wird, mit der Folge, daß der Parklagensensor 22 als zeitabhängige Lastüberwachung den Wischermotor vollständig und endgültig abschaltet.

## Patentansprüche

1. Schaltanordnung zur Ansteuerung eines Wischermotors (10) von Scheibenwischanlagen mit einer zeitabhängigen und temperaturabhängigen Lastüberwachung, wobei der Wischermotor (10) über ein Leistungsschaltelement (13) in Verbindung mit einem Mittel (22) zur Erfassung der Parkstellung eines Wischhebels und einer davon abhängigen Steuerung des Leistungsschaltelements (13) ansteuerbar ist, **gekennzeichnet durch** eine Chiptemperaturüberwachung und Abschaltung des als Halbleiter ausgebildeten Leistungsschaltelements (13) derart, daß zum Schutz vor Überlast und Blockierung des Wischermotors (10) beim Ansprechen der Chiptemperaturüberwachung die zeitabhängige Lastüberwachung anspricht und den Wischermotor (10) vollständig abschaltet.

2. Schaltanordnung nach Anspruch 1, **dadurch gekennzeichnet, daß** als Leistungsschaltelement (13) ein selbstsperrender Fet vorgesehen ist, dessen Gate (18) mit der vom Mittel (22) zur Erfassung der Parklage abhängigen Steuerung (20) verbunden und zu dessen Gate-Source-Strecke (18-15) ein Thyristor (23) parallelgeschaltet ist.

3. Schaltanordnung nach Anspruch 2, **dadurch gekennzeichnet, daß** ein Temperatursensor (27), angebracht auf der Halbleiterendstufe (29), beim Erreichen einer bestimmten Temperatur den Thyristor (23) zündet und die Gate-Source-Strecke (18-15) des Leistungsschalters (13) kurzschließt.

4. Schaltanordnung nach Anspruch 2 oder 3, **dadurch gekennzeichnet, daß** das Gate (18) über eine Ladungspumpe (17) mit einer Steuerung (20) verbunden ist, die ein Steuersignal (U₂₀) an das Gate legt, das durch die Ladungspumpe (17) so verstärkt wird, daß der Leistungsschalter (13) auch im leitenden Zustand steuerbar bleibt.

5. Schaltanordnung nach Anspruch 1, **dadurch gekennzeichnet, daß** als Mittel (22) zur Erfassung der Parkstellung ein Parklagensensor, ein Hallsensor oder eine Kontaktscheibe vorgesehen sind, dessen Signale (U₂₂) der Steuerung (20) zugeführt werden.

6. Schaltanordnung nach Anspruch 4, **dadurch gekennzeichnet, daß** als Steuerung (20) ein zyklisch auf- und entladbarer Kondensator, ein Controller oder eine diskrete Schaltung verwendet werden kann, der die Ladungspumpe (17) taktet.

7. Schaltanordnung nach Anspruch 4, **dadurch gekennzeichnet, daß** ein Signalwechsel des Mittels (22) zum Erfassen der Parkstellung eintritt, wenn entweder der Wischhebel seine Parklage verläßt oder wieder dorthin zurückkehrt, und daß ein Unterbleiben des Signalwechsels nach einer, von der Steuerung vorgegebenen, maximalen Bestromungsdauer (T) zum Abschalten des Wischermotors (10) führt.

8. Schaltanordnung nach Anspruch 4, **gekennzeichnet durch** einen Strombegrenzerwiderstand (28) zwischen Ladungspumpe (17) und Leistungsschaltelement (13) zum Selbstschutz der Halbleiterendstufe (29).

## Claims

1. Switching arrangement for actuating a wiper motor (10) of windscreen wiper systems having time-dependent and temperature-dependent load monitoring, it being possible to actuate the wiper motor (10) by means of a power switching element (13) in conjunction with a means (22) for sensing the parked position of a wiper lever and with the power switching element (13) being controlled as a function thereof, **characterized by** chip temperature monitoring and deactivation of the power switching element (13) which is embodied as a semiconductor, in such a way that, in order to protect against overloading and blockage of the wiper motor (10), when the chip temperature monitoring responds, the time-dependent load monitoring responds and completely deactivates the wiper motor (10).

2. Switching arrangement according to Claim 1, **characterized in that** a self-locking Fet whose gate (18) is connected to the controller (20) which is dependent on the means (22) for sensing the parked position and having a thyristor (23) connected in parallel with its gate-source path (18-15) is provided as power switching element (13).

3. Switching arrangement according to Claim 2, **characterized in that** a temperature sensor (27), mounted on the semiconductor output stage (29), fires the thyristor (23) and short-circuits the gate-source path (18-15) of the power switch (13) when a specific temperature is reached.

4. Switching arrangement according to Claim 2 or 3, **characterized in that** the gate (18) is connected via a charge pump (17) to a controller (20) which applies a control signal (U₂₀) to the gate which is amplified by the charge pump (17) in such a way that the power switch (13) also remains controllable in the conductive state.

5. Switching arrangement according to Claim 1, **characterized in that** a parked position sensor, a Hall sensor or a contact disc whose signals (U₂₂) are fed to the controller (20) are provided as means (22) for sensing the parked position.

6. Switching arrangement according to Claim 4, **characterized in that** a capacitor which can be charged and discharged cyclically, a controller or a discrete circuit which clocks the charge pump (17) can be used as controller (20).

7. Switching arrangement according to Claim 4, **characterized in that** a signal change of the means (22) for sensing the parked position occurs either if the wiper lever leaves its parked position or returns to it again, and **in that** failure of the signal change to occur after a maximum energization period (T) which is predefined by the controller leads to the wiper motor (10) switching off.

8. Switching arrangement as claimed in Claim 4, **characterized by** a current limiting resistor (28) between the charge pump (17) and power switching element (13) for self-protection of the semiconductor output stage (29).

## Revendications

1. Circuit de commande d'un moteur d'essuie-glace (10) d'une installation d'essuie-glace comportant une surveillance de charge en fonction du temps et de la température,
le moteur d'essuie-glace (10) étant commandé par un élément de commutation de puissance (13) en liaison avec un moyen (22) de détection de la position de rangement d'un levier d'essuie-glace et d'une commande de l'élément de commutation de puissance (13) qui en dépend,
**caractérisé par**
une surveillance de la température de la puce et une coupure de l'élément de commutation de puissance (13) réalisé sous la forme d'un semi-conducteur, de façon que pour la protection contre la surcharge et le blocage du moteur d'essuie-glace (10), lors de la mise en oeuvre de la surveillance de température de puce, la surveillance de charge dépendant du temps se met en oeuvre et coupe complètement le moteur d'essuie-glace (10).

2. Circuit selon la revendication 1,
**caractérisé en ce que**
l'élément de commutation de puissance (13) est un transistor FET auto-bloquant dont la porte (18) est reliée à la commande (20) dépendant du moyen (22) de détection de la position de rangement et dont le chemin porte-source (18-15) comporte un thyristor (23) branché en parallèle.

3. Circuit selon la revendication 2,
**caractérisé en ce qu'**
un capteur de température (24) prévu sur l'étage de puissance à semi-conducteur (29), lorsqu'on atteint une certaine température, déclenche le thyristor (23) et court-circuite le chemin porte-source (18-15) du commutateur de puissance (13).

4. Circuit selon l'une quelconque des revendications 2 ou 3,
**caractérisé en ce que**
la porte (18) est reliée à une commande (20) par l'intermédiaire d'une pompe de charge (17), la commande appliquant un signal de commande (U₂₀) à la porte qui est amplifié par la pompe de charge (17) pour que le commutateur de puissance (13) reste commandé en son état conducteur.

5. Circuit selon la revendication 1,
**caractérisé en ce que**
le moyen (22) de détection de la position de rangement est un capteur de position de rangement, un capteur à effet Hall ou un contacteur et dont les signaux (U₂₂) sont appliqués à la commande (20).

6. Circuit selon la revendication 4,
**caractérisé en ce que**
la commande (20) est un condensateur qui se charge et se décharge cycliquement, un contrôleur ou un circuit discret commandant en cadence la pompe de charge (17).

7. Circuit selon la revendication 4,
**caractérisé en ce qu'**
un changement de signal du moyen (22) se produit pour détecter la position de rangement si soit le levier d'essuie-glace quitte sa position de rangement ou y revient de nouveau, et
la disparition de l'alternance du signal après une durée d'alimentation maximale (T), prédéterminée par la commande conduit à la coupure du moteur d'essuie-glace (10).

8. Circuit selon la revendication 4,
**caractérisé par**
une résistance de limitation de courant (28) prévue entre la pompe de charge (17) et l'élément de commutation de puissance (13) pour protéger automatiquement l'étage de puissance à semi-conducteur (29).
